# EUROPEAN PATENT APPLICATION

(11) **EP 4 517 165 A1**
(43) Date of publication of application: **05.03.2025**
(21) Application number: 24196811.4
(22) Date of filing: 27.08.2024
(51) Int. Cl.: F21V 5/00, F21V 5/04, F21V 7/00, F21V 7/04, G02B 19/00, F21S 4/28, F21Y 103/10, F21Y 115/10

(54) **LED LIGHTING FIXTURE AND METHOD HAVING OPTICAL ELEMENT WITH SEGMENTED COLLIMATING SURFACES**

(30) Priority: 28.08.2023 US 202363534970 P
(71) Applicant: LMPG Inc., Longueuil QC J4G 2H9 (CA)
(72) Inventor: RIVARD, Isabelle, Longueuil (CA); GRASSI, David, Pointe-Claire (CA)
(74) Representative: Carroll, Christopher P.

(57) **Abstract**

An optical element for a light fixture is adapted to receive light from a light source and to direct the light toward a light-emitting surface along an axis of the optical element. The optical element includes an inner surface disposed axially around and at least partially enclosing the axis of the optical element, the inner surface at least partially containing the light within the optical element by internal reflection of the light, the inner surface being defined by at least two geometric shapes coaxially disposed with respect to the axis of the optical element.

## Description

### CROSS-REFERENCE TO RELATED APPLICATIONS

The present application is related to and claims the benefit of U. S. Provisional Application No. 63/534,970, filed on August 28, 2023.

### BACKGROUND

### 1. Technical Field

The present disclosure is related to lighting systems and, in particular, to LED lighting systems and methods employing optical elements with segmented light collimating surfaces.

### 2. Discussion of Related Art

In interior and exterior lighting systems, it is desirable to provide high-intensity and uniform-intensity output illumination light. It is also desirable to provide high-quality color mixing use color changing luminaires, typically including or more of red, green, blue, and white light-emitting diodes (LEDs), or other combinations of color. With such lighting systems, it is desirable that as much light as possible is emitted from the luminaire. It is also desirable that the light be as well controlled optically as possible. The light beam should be as collimated as possible, and the light should be well mixed, which no artifacts or evidence of poor color mixing. It is also desirable to provide a narrow beam angle with a defined and constrained size for internal fixture optics. However, since it is also desirable to have as small a luminaire size as possible, there is a challenging trade-off between minimizing physical size and maximizing optical control.

### SUMMARY

According to a first aspect, the current disclosure is directed to a light fixture having a fixture housing, a top surface fixedly attached to a top of the light fixture through which light can be emitted, and a lighting subassembly in the fixture housing. The lighting subassembly includes a light source for emitting the light and an optical element disposed between the light source and the top surface. The optical element receives the light from the light source and directs the light toward the top surface along an axis of the optical element. The optical element includes an inner surface disposed axially around and at least partially enclosing the axis of the optical element, the inner surface at least partially containing the light within the optical element by internal reflection of the light, the inner surface being defined by first and second geometric shapes coaxially disposed with respect to the axis of the optical element.

In some exemplary implementations, the first and second geometric shapes are two concentric circles having first and second respective radii, the first and second radii being different.

In some exemplary implementations, a third geometric shape can be coaxially disposed with the first and second geometric shapes. The first, second and third geometric shapes can be concentric circles having first, second and third respective radii, the first, second and third radii being different.

According to another aspect, the current disclosure is directed to a lighting subassembly for a light fixture having a surface through which light can be emitted. The lighting subassembly includes a light source for emitting the light and an optical element for receiving the light from the light source. The optical element receives the light from the light source and directs the light toward the surface along an axis of the optical element. The optical element includes an inner surface disposed axially around and at least partially enclosing the axis of the optical element, the inner surface at least partially containing the light within the optical element by internal reflection of the light, the inner surface being defined by at least two geometric shapes coaxially disposed with respect to the axis of the optical element.

In some exemplary implementations, the first and second geometric shapes are two concentric circles having first and second respective radii, the first and second radii being different.

In some exemplary implementations, a third geometric shape can be coaxially disposed with the first and second geometric shapes. The first, second and third geometric shapes can be concentric circles having first, second and third respective radii, the first, second and third radii being different.

According to another aspect, the current disclosure is directed to an optical element for a light fixture having a surface through which light can be emitted. The optical element is adapted to receive light from a light source and to direct the light toward the surface along an axis of the optical element. The optical element includes an inner surface disposed axially around and at least partially enclosing the axis of the optical element, the inner surface at least partially containing the light within the optical element by internal reflection of the light, the inner surface being defined by at least two geometric shapes coaxially disposed with respect to the axis of the optical element.

### BRIEF DESCRIPTION OF THE DRAWINGS

The present disclosure is further described in the detailed description which follows, in reference to the noted plurality of drawings by way of non-limiting examples of implementations of the present disclosure, in which like reference numerals represent similar parts throughout the several views of the drawings.
Fig. 1 includes a schematic perspective view of a light fixture with an improved optical element, according to some exemplary implementations.
Fig. 2A includes a schematic bottom perspective view of a plurality of optical elements, according to some exemplary implementations.
Fig. 2B includes a schematic top perspective view of a plurality of optical elements, according to some exemplary implementations.
Fig. 2C includes a schematic top view of a plurality of optical elements, according to some exemplary implementations.
Fig. 2D includes a schematic side view of a plurality of optical elements, according to some exemplary implementations.
Fig. 2E includes a schematic bottom view of a plurality of optical elements, according to some exemplary implementations.
Fig. 3A includes a schematic side view of an optical element, according to some exemplary implementations.
Fig. 3B includes a schematic bottom perspective view of an optical element, according to some exemplary implementations.
Fig. 4A includes a schematic top view of an optical element, according to some exemplary implementations.
Fig. 4B includes a schematic side view of an optical element, according to other exemplary implementations.
Fig. 4C includes a schematic side view of an optical element, according to still other exemplary implementations.

### DETAILED DESCRIPTION

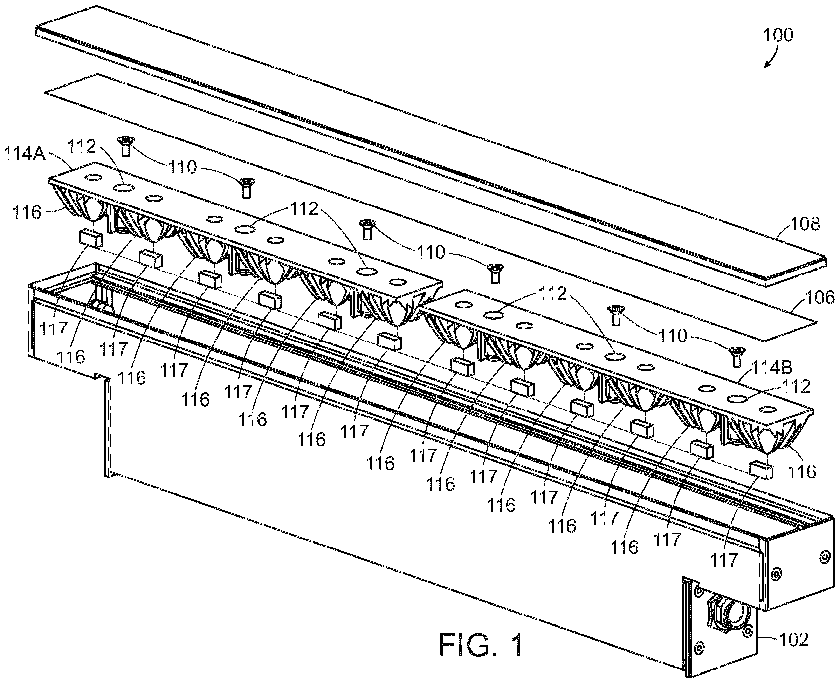

Fig. 1 includes a schematic perspective view of a light fixture 100 with an improved optical element, according to some exemplary implementations. Referring to Fig. 1, light fixture 100 includes a housing 102 which houses the components of the fixture 100. In some particular implementations, fixture 100 further comprises two optical element groups 114A and 114B, each of which includes a plurality of, in this particular exemplary implementation, six, optical elements 116, according to the exemplary implementations. Each of optical element groups 114A and 114B includes a lower section at the bottom of each of optical elements 116 at which source light, such as light-emitting diode (LED) source light from a respective plurality of LED sources 117, enters each of optical elements 116, and a top surface 118A and 118B, respectively, through which the illumination light output of the fixture 100 passes. The combination of optical elements 116 and LED sources 117 can be referred to as one or more "lighting subassemblies." The LED source light is substantially contained within each optical element 116 by internal reflection, i.e., total internal reflection (TIR), from inner surfaces of optical elements 116, of the light, until it exits optical elements 116 through top surfaces 118A and 118B. Optical element groups 114A and 114B are fixedly mounted to and within housing 102 by threaded screws 110, passing through respective holes 112 in optical element groups 114A and 114B and threading into threaded holes (not shown) in housing 102.

It is noted that LED sources 117 can be any type of LED sources. For example, LED sources can be Red-Green-Blue-White (RGBW) quad LED sources. In the exemplary implementations, individual clustered red, green, blue, and white LEDs can be used.

Fixture 100 can also include an optional secondary diffuser 106, which can be holographic, volumetric, molded or extruded, over optical element groups 114A and 114B. A sealing lens 108 can be disposed over panel 106. Sealing lens 108 can include optical features for affecting optical performance such as color mixing, optical distributions, etc.

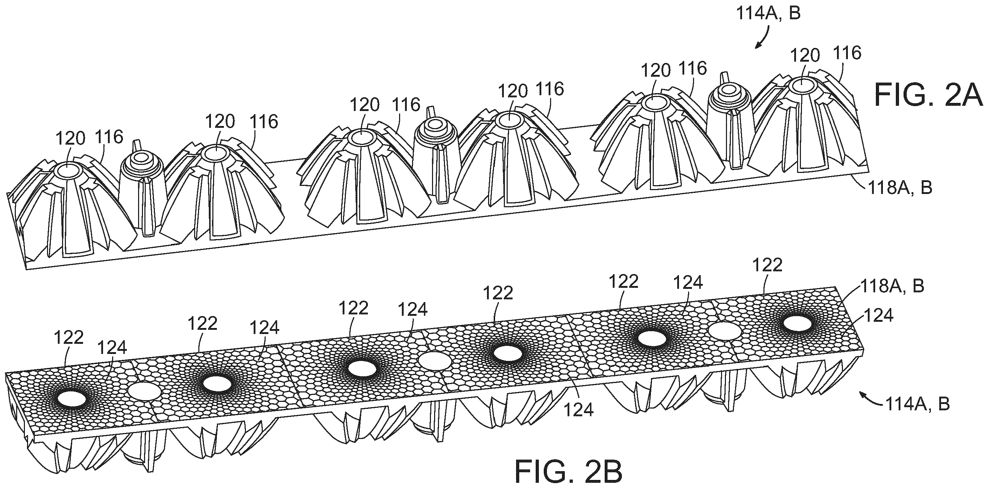

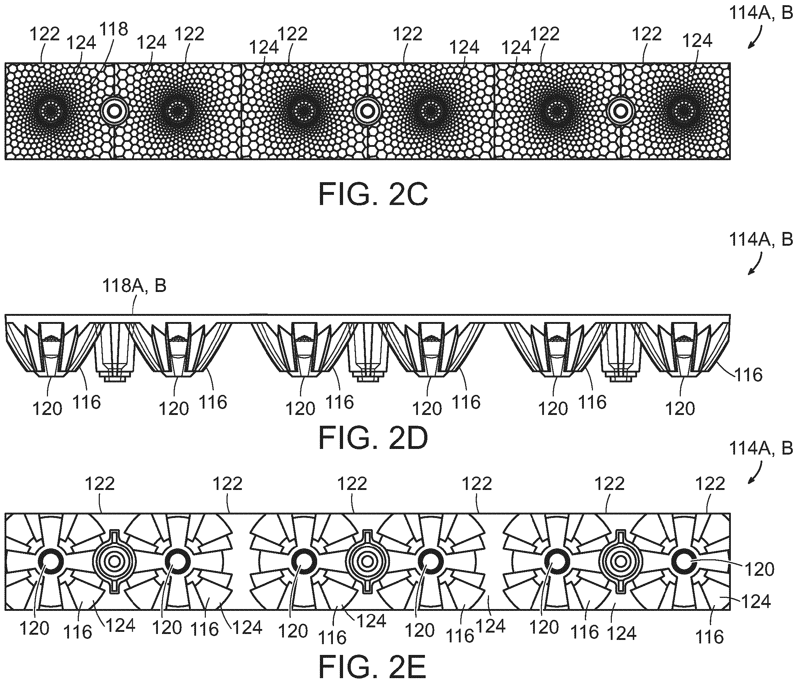

Fig. 2A includes a schematic bottom perspective view of a group 114A,B of optical elements 116, according to some exemplary implementations. Fig. 2B includes a schematic top perspective view of group 114A,B of optical elements 116 illustrated in Fig. 2A. Fig. 2C includes a schematic top view of group 114A,B of optical elements 116 illustrated in Fig. 2A. Fig. 2D includes a schematic side view of group 114A,B of optical elements 116 illustrated in Fig. 2A. Fig. 2E includes a schematic bottom view of group 114A,B of optical elements 116 illustrated in Fig. 2A. Referring to Figs. 2A through 2E, in some exemplary implementations, groups 114A,B of optical elements 116 are made of a material such as acrylic, polycarbonate, silicone, glass, etc., or other commonly used optical material and are formed by known fabrication processes.

As described above, each optical element 116 includes a lower opening 120 through which source light, such as light from an LED source 117, enters the interior of optical element 116. The light passes "up" through optical element 116 along an axis, e.g., optical axis, of optical element 116. See Fig. 2D, for example, which illustrates the convention for the direction "up" herein as being the direction from opening 120 toward top surface 118. The LED source light is substantially contained within each optical element 116 by internal reflection, i.e., total internal reflection (TIR), from inner surfaces of optical elements 116, of the light, until it exits optical elements 116 through top surface 118A,B.

As illustrated in Figs. 2A through 2E, group 114A,B of optical elements 116 is partitioned into a plurality of rectangular regions 122. Each optical element 116 is associated with and disposed within a respective rectangular region 122. It is noted that, in some particular exemplary implementations, rectangular regions 122 can be square. Top surface 118A,B can include and be formed with a pattern of optical features 124 such as, for example, lenses, collimators, diffusers, or other optical elements according to some exemplary implementations. Each rectangular region 122 can include its own pattern of optical features 124, as illustrated in Figs. 2A through 2E.

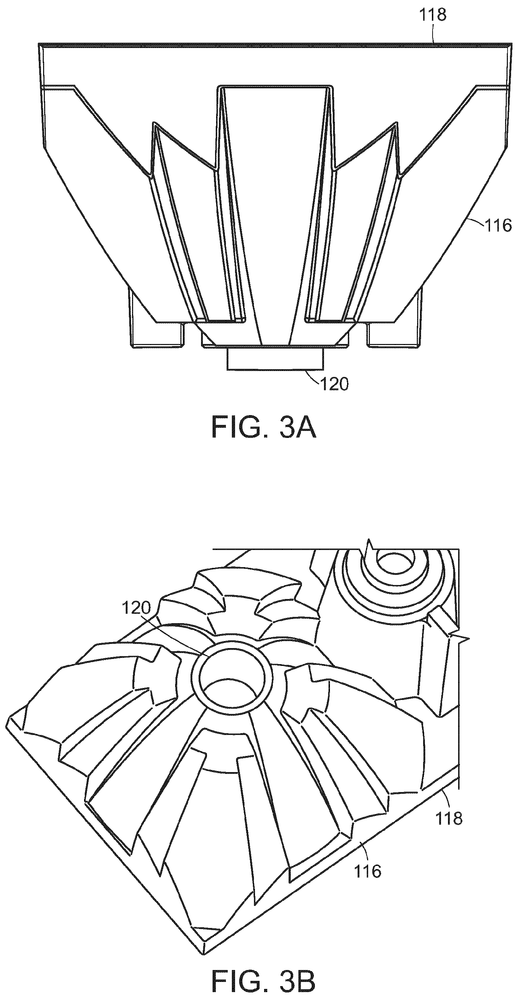

Fig. 3A includes a schematic side view of optical element 116, according to some exemplary implementations. Fig. 3B includes a schematic bottom perspective view of optical element 116, according to some exemplary implementations. Referring to Figs. 3A and 3B, optical element 116 includes lower opening 120 through which source light enters the interior of optical element 116. As described in detail above, the source light is substantially contained within optical element 116 via internal reflection realized by inner surfaces of optical element 116. The illumination light exits optical element 116 through top surface 118.

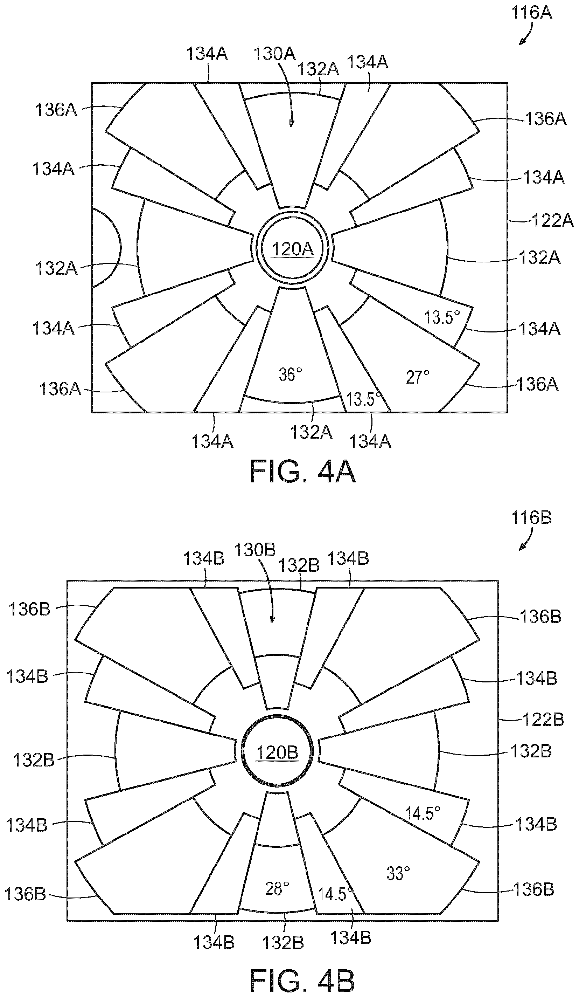

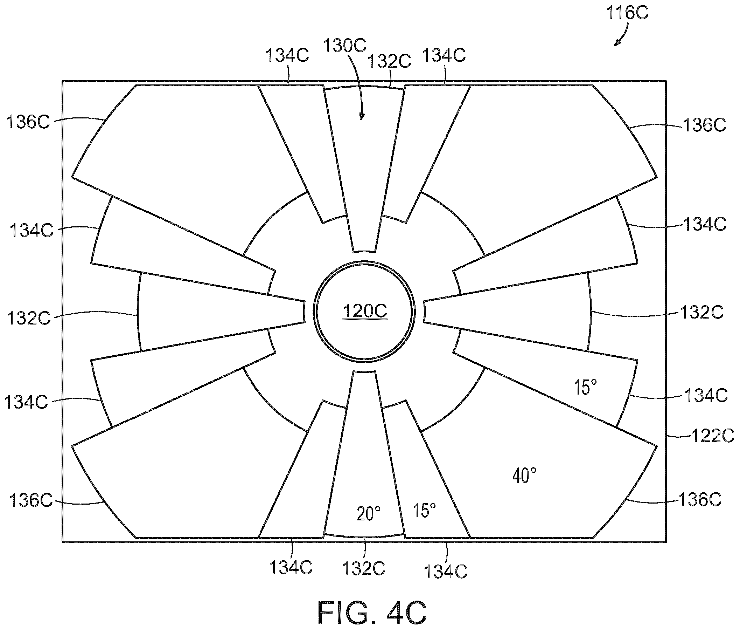

Fig. 4A includes a schematic top view of an optical element 116A, according to some exemplary implementations. Fig. 4B includes a schematic side view of an optical element 116B, according to other exemplary implementations. Fig. 4C includes a schematic side view of an optical element 116C, according to still other exemplary implementations. Referring to Figs. 4A, 4B, and 4C, optical elements 116A, 116B, and 116C include lower openings 120A, 120B, and 120C, respectively, through which source light enters the interiors of optical elements 116A, 116B, and 116C, respectively. Figs. 4A, 4B, and 4C also show boundaries of rectangular regions 122A, 122B, and 122C, associated with optical elements 116A, 116B, and 116C, respectively. The source light is substantially contained within optical elements 116A, 116B, and 116C, respectively, via internal reflection from inner surfaces 130A, 130B, and 130C, respectively.

According to the current disclosure, inner surfaces 130A, 130B, and 130C are configured to control the internal reflection such that the output illumination light displays desired characteristics. Specifically, the size, shape and position of inner surfaces are configured to control internal reflection such that the output illumination can be generated having a desired intensity profile, e.g., intensity uniformity, and/or a desired color profile, e.g., color purity and/or color combination of source LEDs have multiple colors, or other desired output illumination characteristics. Due to physical laws, the size and shape of inner surfaces 130A, 130B, and 130C are larger than a typically rotationally symmetric optic. As a result, according to the present disclosure, there is greater system etendue, which results in greater optical control, intensity, etc. It also results in a greater emittance luminance, which results in lower observed glare.

Continuing to refer to Figs. 4A through 4C, in some exemplary implementations, inner surfaces 130A, 130B, 130C are partitioned or segmented surfaces, which define a plurality of geometric shapes, for example, circles of different radii, coaxially disposed with the optical axis, i.e., the axis along which the source light propagates from lower openings 120A, 120B, 120C toward top surface 118. For example, referring to Fig. 4A, four surface segments 132A define a first circular shape having a first radius; eight surface segments 134A define a second circular shape having a second radius larger than the first radius; and four surface segments 136A define a third circular shape having a third radius larger than the second radius. In some particular exemplary implementations, all three of these sets of surface segments 132A, 134A, and 136A define the three circular shapes of increasing radius disposed coaxially with each other and with the optical axis of optical element 116A.

As illustrated in Figs. 4A, 4B, and 4C, in some particular implementations, surface segments 132A,B,C, 134A,B,C, and 136A,B,C extending to "left" and "right" sides (with reference to the elevational view of the figures) of rectangular regions 122A, 122B, and 122C, respectively, are complete. However, surface segments 132A,B,C, 134A,B,C, and 136A,B,C extending to "top" and "bottom" sides (with reference to the elevational view of the figures) of rectangular regions 122A, 122B, and 122C, respectively, are truncated so as to be contained within rectangular regions 122A, 122B, and 122C.

Thus, according to the current disclosure, optical element 116, with segmented or partitioned inner reflective surfaces, "stretches" the output light emission to fill more of regions 112. With a light source 117 made with a 2x2 LED cluster (4 LED packages placed close to each other), the light emitting surface is larger than that of a single LED or a quad chip LED (one package containing four LED dies stacked close to each other). In the exemplary implementations, individual clustered red, green, blue, and white LEDs can be used. To reach the same performances in intensity, a narrower beam angle is desirable. The "stretched" optical element 116 of the current disclosure allows a narrower beam angle within the same footprint as a prior round total internal reflection (TIR) optic. According to the current disclosure, the "corners" of a prior "round" TIR optic are extended, resulting in three different diameter sizes merged in one optic, i.e., optical element 116 described herein in detail.

Referring to Figs. 4A through 4C, each implementation of optical element 116A, 116B, and 116B is distinguished by the sizes of the surface segments. Specifically, in optical element 116A of Fig. 4A, surface segments 132A have angular extents of 36 degrees for a total of 144 degrees, surface segments 134A have angular extents of 13.5 degrees for a total of 108 degrees, and surface segments 136A have angular extents of 27 degrees for a total of 108 degrees. Similarly, in optical element 116B of Fig. 4B, surface segments 132B have angular extents of 28 degrees for a total of 112 degrees and a nominal diameter of 35.42mm, surface segments 134B have angular extents of 14.5 degrees for a total of 116 degrees and a nominal diameter of 43.3mm, and surface segments 136B have angular extents of 33 degrees for a total of 132 degrees and a nominal diameter of 48.28mm. Similarly, in optical element 116C of Fig. 4C, surface segments 132C have angular extents of 20 degrees for a total of 80 degrees, surface segments 134C have angular extents of 15 degrees for a total of 120 degrees, and surface segments 136C have angular extents of 40 degrees for a total of 160 degrees.

Based on the Etendue Law, the light beam angle is determined by the source size versus the optic diameter. For the same source size, the larger the optic, i.e., optical element, the narrower the beam angle will be. With the optical element 116 of the current disclosure, within the same diameter size, if the "corners" of the optic are extended or "stretched" toward the extents of the rectangular regions 122, a larger diameter is achieved. The light passing through those larger sections will yield a narrower beam angle. The overall beam angle will be an average of the resulting beam angles of each TIR diameter. This will yield a narrower beam angle overall, increasing the intensity performance and allows for improvement in color mixing while maintaining good overall performance.

Referring to Fig. 4B in particular, 31% of the optical element 116B has the smallest diameter 35.42mm, 32% of the optical element 116B has the second smallest diameter 43.3mm, and 37% of the optical element 116B has the largest diameter 48.28mm. For the same source size, the larger the optical element 116, the narrower the beam angle will be, and the higher, more uniform the intensity will be. So, by "stretching" the corners of the smaller diameter into two larger diameters, according to the current disclosure, 69% of the light will hit a larger diameter, resulting in narrower beam angle overall. Thus, according to the current disclosure, with the optical element 116, a narrower beam angle is achieved within a similar diameter to the prior conical TIR optic. The larger the difference between optical element 116 and source (LED) 117, the greater the system etendue, which defines optical control in terms of beam angle, intensity, etc.

Whereas many alterations and modifications of the disclosure will become apparent to a person of ordinary skill in the art after having read the foregoing description, it is to be understood that the particular implementations shown and described by way of illustration are in no way intended to be considered limiting. It is noted that the foregoing examples have been provided merely for the purpose of explanation and are in no way to be construed as limiting of the present disclosure.

While the present inventive concept has been particularly shown and described with reference to exemplary implementations thereof, it will be understood by those of ordinary skill in the art that various changes in form and details may be made therein without departing from the scope of the present inventive concept as defined by the following claims.

## Claims

1. A light fixture, comprising:
a fixture housing;
a top surface fixedly attached to a top of the light fixture through which light can be emitted; and
a lighting subassembly in the fixture housing, the lighting subassembly comprising:
a light source for emitting the light, and
an optical element disposed between the light source and the top surface, the optical element receiving the light from the light source and directing the light toward the top surface along an axis of the optical element, the optical element including an inner surface disposed axially around and at least partially enclosing the axis of the optical element, the inner surface at least partially containing the light within the optical element by internal reflection of the light, the inner surface being defined by first and second geometric shapes coaxially disposed with respect to the axis of the optical element.

2. The light fixture of claim 1, wherein the first and second geometric shapes are two concentric circles having first and second respective radii, the first and second radii being different.

3. The light fixture of claim 2, further comprising a third geometric shape coaxially disposed with the first and second geometric shapes.

4. The light fixture of claim 3, wherein the first, second and third geometric shapes are concentric circles having first, second and third respective radii, the first, second and third radii being different.

5. A lighting subassembly for a light fixture having a surface through which light can be emitted, comprising:
a light source for emitting the light, and
an optical element for receiving the light from the light source and directing the light toward the surface along an axis of the optical element, the optical element including an inner surface disposed axially around and at least partially enclosing the axis of the optical element, the inner surface at least partially containing the light within the optical element by internal reflection of the light, the inner surface being defined by at least two geometric shapes coaxially disposed with respect to the axis of the optical element.

6. The light fixture of claim 5, wherein the first and second geometric shapes are two concentric circles having first and second respective radii, the first and second radii being different.

7. The light fixture of claim 6, further comprising a third geometric shape coaxially disposed with the first and second geometric shapes.

8. The light fixture of claim 7, wherein the first, second and third geometric shapes are concentric circles having first, second and third respective radii, the first, second and third radii being different.

9. An optical element for a light fixture having a surface through which light can be emitted, the optical element being adapted to receive light from a light source and to direct the light toward the surface along an axis of the optical element, the optical element including an inner surface disposed axially around and at least partially enclosing the axis of the optical element, the inner surface at least partially containing the light within the optical element by internal reflection of the light, the inner surface being defined by at least two geometric shapes coaxially disposed with respect to the axis of the optical element.
